# FASCICULE DE BREVET EUROPEEN

(11) **EP 1 462 307 B1**
(45) Date de publication et mention de la délivrance du brevet: **14.11.2007**
(21) Numéro de dépôt: 03100823.8
(22) Date de dépôt: 28.03.2003
(51) Int. Cl.: B60P 1/64, B60P 1/54, B60P 3/00

(54) **Ensemble de transport à véhicule tracteur dont la plateforme est amovible et interchangeable avec un autre engin tracteur**
Transporteinheit mit Zugfahrzeug mit abnehmbarer und mit einer weiteren Zugmaschine austauschbarer Ladefläche
Transportation unit with truck tractor with removable platform interchangeable with another traction engine

(43) Date de publication de la demande: 29.09.2004
(73) Titulaire: Cattin, Jean-René, 31320 Auzeville (FR)
(72) Inventeur: Cattin, Jean-René, 31320 Auzeville (FR)
(74) Mandataire: Ravina, Bernard

(56) Documents cités:
- DE-A- 3 326 625
- GB-A- 1 174 403
- GB-A- 1 327 821
- GB-A- 1 517 915
- GB-A- 2 268 135
- US-A- 4 880 346

## Description

La présente invention concerne un véhicule tracteur sur le châssis duquel est fixé une plateforme 4 quadrangulaire recevant la charge à transporter et sur laquelle est montée une grue 5 avec son bras articulée 6, elle concerne également un ensemble de transport comportant un tel véhicule tracteur.

GB 2 268 135 A décrit comme art antérieur pertinent un véhicule tracteur dont la plateforme est fixée de manière amovible sur le châssis.

La demanderesse s'est fixée pour objectif de réaliser un véhicule tracteur dont la plateforme soit désolidarisable de manière à la fixer avec la charge qu'elle supporte, soit sur le châssis dudit véhicule tracteur, soit sur le châssis d'un autre moyen tracteur, par exemple un engin à chenilles téléguidable. Cet objectif est atteint grâce à l'invention qui consiste en un véhicule tracteur 2 selon la revendication 1.

Préférentiellement, les béquilles sont en position escamotée dans la configuration de transport du véhicule tracteur, et présentent chacune une position d'extension intermédiaire pour être en appui sur le sol et assurer la stabilité de l'ensemble lors des opérations de chargement-déchargement, ainsi qu'une position d'extension maximum de manière à soulever la plateforme 4 par rapport au châssis 3.

Préférentiellement, l'autre moyen tracteur comporte les mêmes organes de fixation que le véhicule tracteur.

On comprendra mieux l'invention à l'aide de la description qui ci-après d'un exemple de réalisation non limitatif, faite en référence aux figures annexées suivantes :
- figure 1 : vue générale d'un ensemble de transport selon l'invention montrant le véhicule tracteur et sa remorque en configuration de transport sur route,
- figure 2 : vue générale du véhicule tracteur de la figure 1 en configuration de déchargement avec ses béquilles de stabilisation,
- figures 3 et 4 : déchargement au sol de l'engin à chenilles au moyen de la grue à bras articulé porté par le véhicule tracteur,
- figures 5 et 6 : vues de détail d'une des fixations de la plateforme du véhicule tracteur sur son châssis,
- figure 7 : vue du véhicule tracteur avec sa plateforme désolidarisée du châssis et soulevée par rapport à celui-ci,
- figure 8 : vue de détail montrant la séparation de la plateforme et de son châssis,
- figure 9 : vue générale montrant le véhicule tracteur s'éloignant de sa plateforme,
- figures 10 et 11 : vue générale montrant l'engin à chenilles se mettant en place sous la plateforme,
- figure 12 : vue de détail montrant les moyens de fixation avant leur assemblage, la plateforme étant encore soulevée,
- figures 13 et 14 : vues de détail des fixations, la plateforme étant abaissée et supportée par le châssis de l'engin à chenilles,
- figure 15 : vue générale de l'engin à chenilles en configuration de transport de la plateforme.
- Figure 16 : vue du camion et de la plateforme en porte-à-faux arrière.

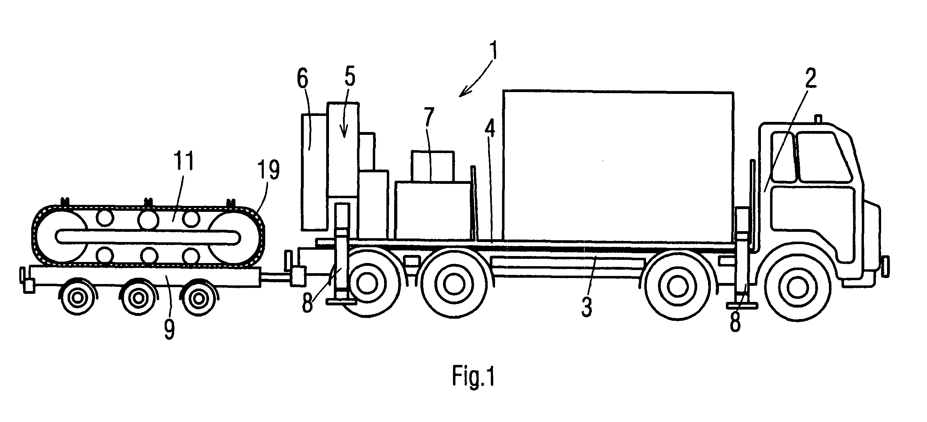

On se rapporte d'abord à la figure 1. L'ensemble de transport 1 selon l'invention se compose d'un véhicule tracteur 2 sur le châssis 3 duquel est fixé de manière amovible une plateforme 4 quadrangulaire recevant la charge à transporter. Sur cette plateforme, sont montées une grue 5 avec son bras articulé 6 et une moto pompe hydraulique 7. Ladite plateforme 4 est équipée de quatre béquilles hydrauliques 8, qui dans la configuration de transport sur route de la figure 1, sont en position escamotée. Dans la configuration de transport sur route de la figure 1, le véhicule tracteur 2 tracte une remorque 9 portant sur son plateau un engin à chenilles 11.

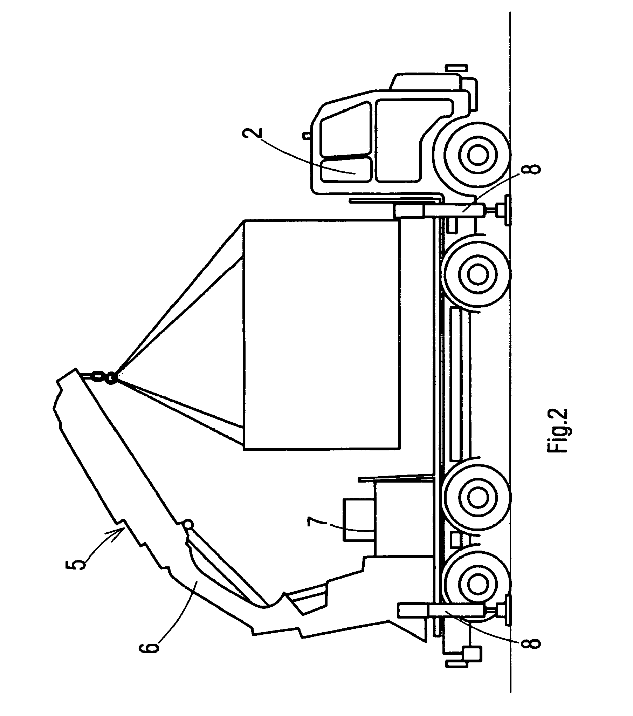

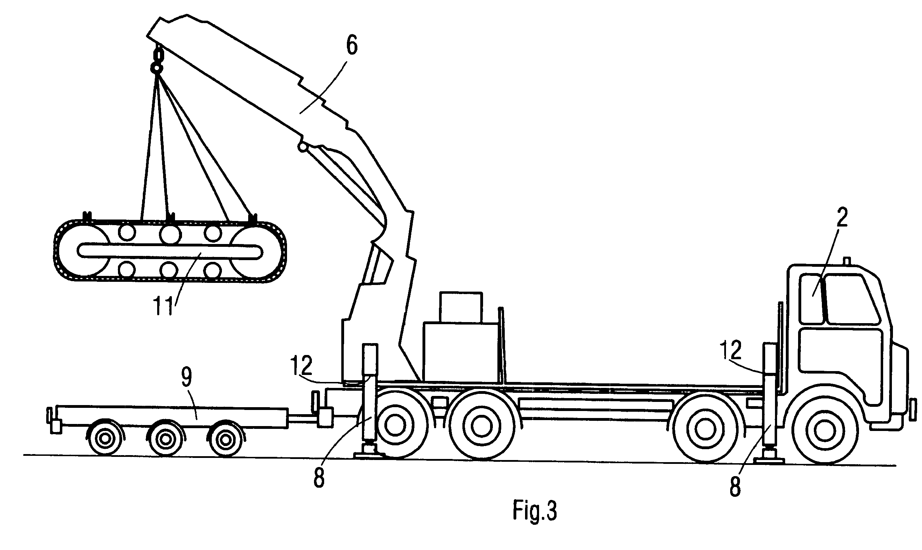

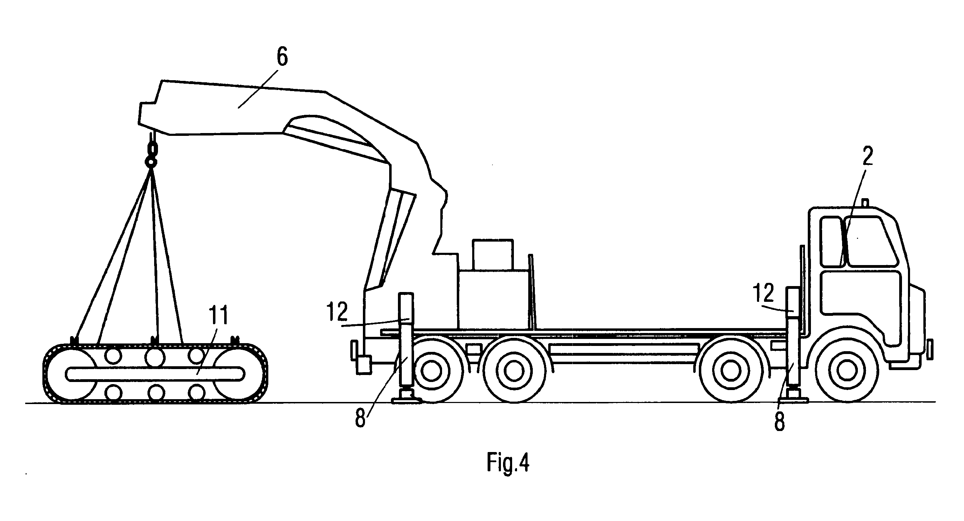

On se rapporte à présent aux figures 2 à 4. Le véhicule tracteur 2 est représenté en configuration de chargement - déchargement de l'engin à chenilles 11 ou de toute autre charge. Les béquilles hydrauliques 8 sont montées aux extrémités de deux traverses du châssis du véhicule 3, extensibles par exemple téléscopiquement, afin d'écarter latéralement plus ou moins lesdites béquilles par rapport au véhicule tracteur 2.

Dans cette configuration des figures 2 à 4, la plateforme 4 est solidarisée au châssis 3 du véhicule, les béquilles en extension intermédiaire, écartées latéralement par les traverses 12 en extension sont en appui sur le sol, et elles assurent la stabilité de l'ensemble lors des opérations de chargement - déchargement, soit de la charge, soit de l'engin à chenilles 11.

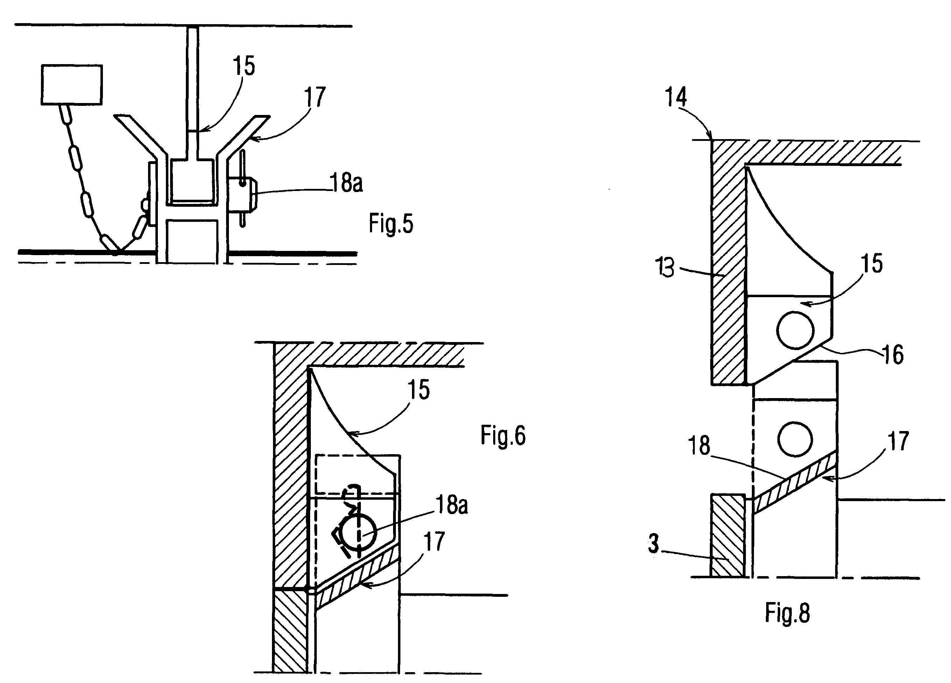

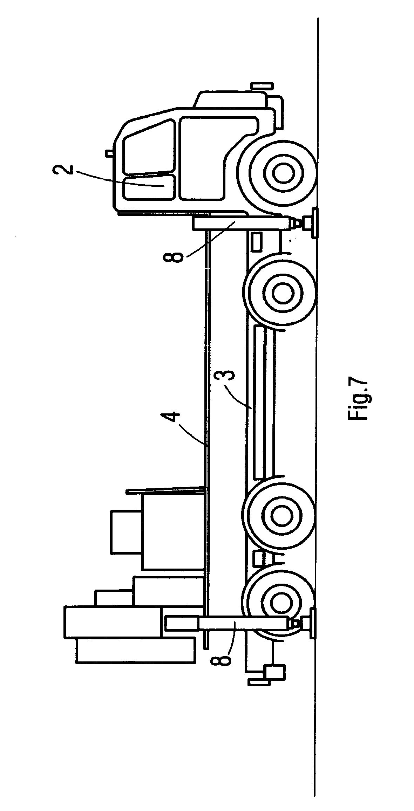

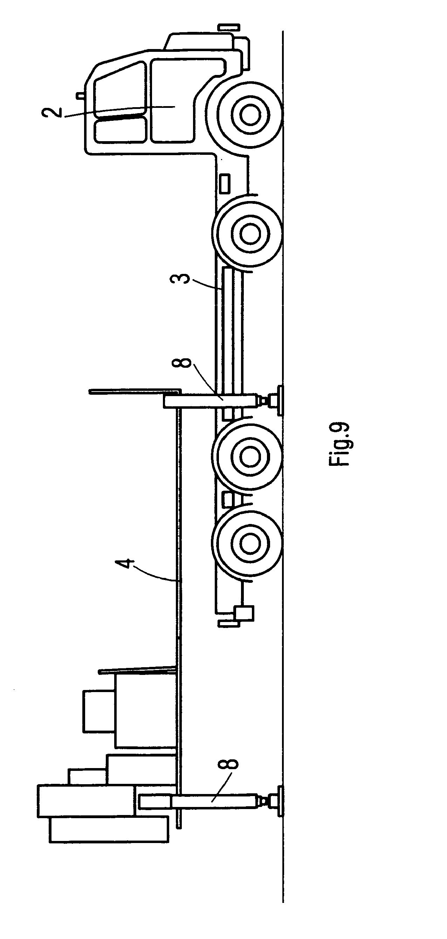

On se rapporte à présent aux figures 5 à 9 montrant la désolidarisation de la plateforme 4 et la sortie du véhicule tracteur 2. La plateforme 4 est fixée sur un faux châssis formé de deux poutres longitudinales 13 et de traverses 14 (figure 8). Les poutres longitudinales sont équipées à espaces réguliers d'organes mâles de fixation 15 de forme générale verticale plane et trapézoïdale présentant une pente 16 de positionnement. Des organes de fixation femelles 17 sont prévus sur le châssis du véhicule 3, en regard de chaque organe de fixation mâle et à pas constant. Chaque organe de fixation femelle 17 a la forme générale d'une fourche avec une rampe intérieure 18 facilitant la mise en place des organes de fixation mâles. Chaque moyen de fixation formé d'un organe mâle et d'un organe femelle est solidarisé (figures 5, 6) ou désolidarisé (figure 8) au moyen d'une attache rapide 18a de type connu. Après désolidarisation de tous les moyens de fixation, les béquilles 8 peuvent être amenées en position d'extension maximum de manière à soulever la plateforme 4 (figure 9) par rapport au châssis 3 et le véhicule tracteur 2 peut s'éloigner de la plateforme (figure 9) qui reste sur place portée par ses quatre béquilles en position d'extension verticale haute, les traverses extensibles 12 étant également en extension.

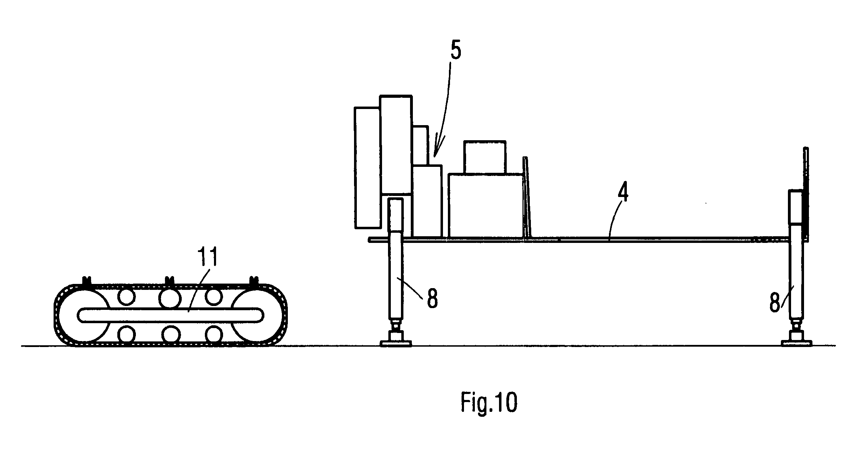

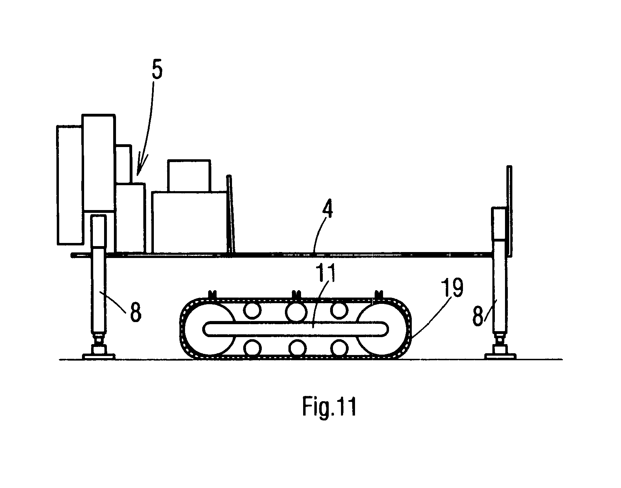

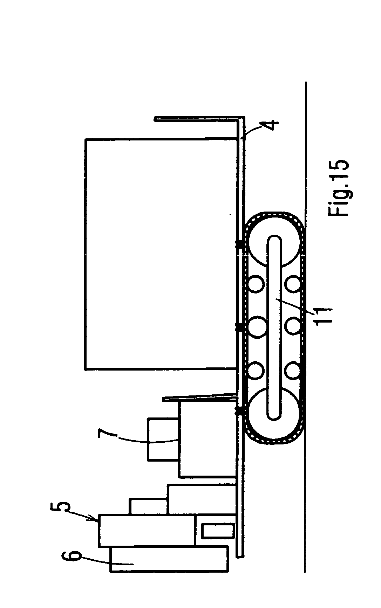

On se rapporte à présent aux figures 10 à 15. Sous la plateforme restée en place après l'éloignement du véhicule porteur, l'engin à chenilles peut être amené (figure 10) et mis en place (figure 11 ) sous la plateforme 4, ses déplacements étant téléguidés.

L'engin à chenilles 11 comporte des moteurs hydrauliques pour l'actionnement des chenilles 19, lesdits moteurs étant connectés par des conduits à la centrale moto hydraulique de la grue 5. L'engin à chenille 11 comporte également un châssis avec deux longerons 21, chacun comportant une pluralité d'organes de fixation femelles 17 espacés régulièrement du même pas constant que les organes de fixation mâles 15 de la plateforme.

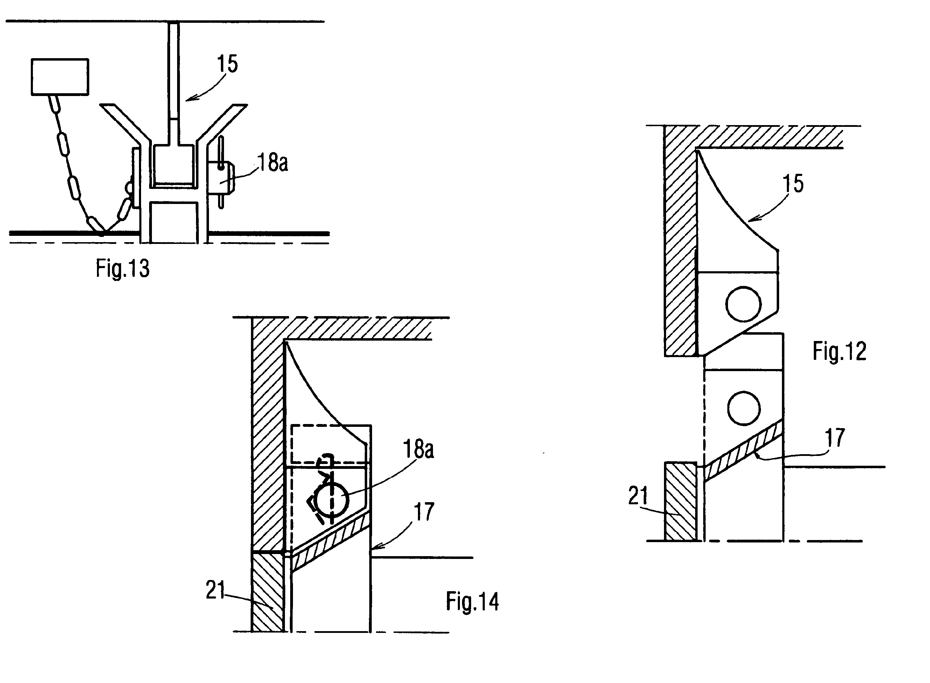

Les béquilles peuvent être alors abaissées de façon à descendre la plateforme au contact du châssis de l'engin à chenilles, des organes mâles et femelles coopérant par emboîtement (figures 13, 14) pour former des moyens de fixation bloqués par les mêmes attaches rapides 18a de la plateforme. Les béquilles 8 peuvent alors totalement remontées dans leur position escamotée et les traverses extensibles peuvent être réduites jusqu'à rapprocher les béquilles au contact de la plateforme.

La plateforme et sa charge peuvent alors être transportées par l'engin à chenilles 11 vers des lieux inaccessibles par le véhicule tracteur 2.

Une autre fonctionnalité de l'invention, résultant de la faculté de soulever la plateforme, réside dans le fait qu'il devient possible par déplacement du véhicule tracteur, d'inverser la position de la plateforme relativement audit véhicule tracteur.

Ainsi la plateforme peut être disposée, soit avec son extrémité portant la grue, côté avant et immédiatement derrière la cabine de conduite, soit avec cette même extrémité placée vers l'arrière à l'opposé de la cabine de conduite du véhicule tracteur.

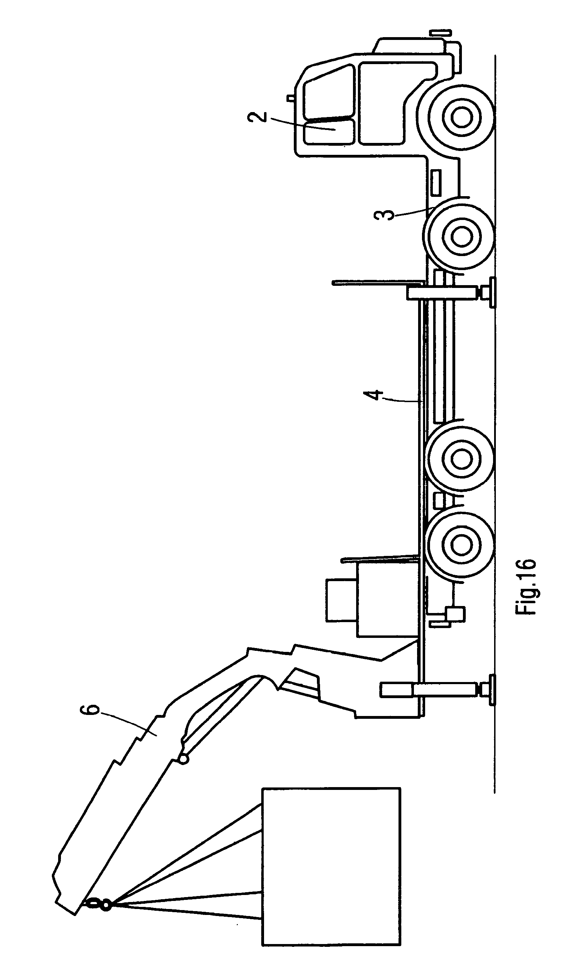

La multiplicité des points de fixation espacés d'un pas fixe, autorise un positionnement longitudinal ajustable de la plateforme sur le châssis 3 du véhicule tracteur. On peut de cette manière ajuster le porte-à-faux arrière de la plateforme par rapport au châssis du véhicule tracteur comme on peut le voir en figure 16. Cette disposition trouve principalement son intérêt lors des manoeuvres de charge en arrière du camion. Pour cette manoeuvre de charge, la plateforme est toujours fixée au châssis du camion et est toujours en appui sur le sol par l'entremise des béquilles 8. On comprend aisément que dans cette configuration le poids du camion créé un couple de basculement résistant autour des béquilles arrière qui s'oppose au couple de basculement vers l'arrière autour de ces mêmes béquilles, créé par le poids de la charge et dans une moindre mesure de la flèche de la grue.

En outre, le châssis 3 du véhicule tracteur, de même que celui de l'engin à chenilles, étant équipé de traverses, le véhicule ou l'engin peuvent être utilisés après dépôt de la plateforme pour transporter de nouvelles charges.

L'ensemble de transport tel que décrit peut être appelé pour la mise en place d'une charge sur un site posant des difficultés d'accès. Dans ce cas de figure l'ensemble de transport comporte la remorque et l'engin à chenille installé sur cette dernière, la charge à poser étant portée par le véhicule tracteur. Le déplacement vers le site s'effectue à vitesse routière normale et une fois parvenu à proximité immédiate du site l'engin à chenille est déchargé de la remorque à l'aide de la grue. La charge est installée par cette même grue sur la plateforme précédemment installée sur l'engin à chenille et est déplacée à vitesse réduite par cet engin vers le site d'implantation. Pendant ce temps le véhicule et la remorque peuvent être utilisés pour d'autres transports.

La plateforme et la grue peuvent être laissées sur un chantier futur ce qui libère le véhicule d'une charge pondérable et d'un volume non négligeable. Ainsi ce véhicule peut alors être utilisé pour transporter un nombre plus important de charge. Le déchargement du camion pourra alors être effectuée par la grue de la plateforme le camion à cette fin étant engagé latéralement sous ladite plateforme. Après déchargement le camion pourra être engagé longitudinalement sous la plateforme et ce d'un côté ou de l'autre selon que la grue doit être placée à l'avant côté cabine ou à l'arrière. L'intérêt de cette dernière position combinée au fait que la plateforme est solidarisée au camion par des points de fixation équidistants est de permettre comme dit précédemment de créer un porte-à-faux à l'arrière du camion. Ce porte à faux permet de libérer de la place entre la cabine et la grue. On augmente ainsi les capacités de chargement du véhicule. On pourra prévoir aussi un montage de la plateforme sur glissières ce qui augmente les possibilités de réglage du porte-à-faux.

## Revendications

1. Véhicule tracteur (2), sur le châssis duquel est fixé une plateforme (4) quadrangulaire recevant la charge à transporter et sur laquelle est montée une grue (5) avec son bras articulé (6), laquelle plateforme est fixée de manière amovible sur le châssis (3) du véhicule par une pluralité de moyens de fixation et comporte quatre béquilles hydrauliques (8) de hauteur variable et réglable, et deux traverses (12) extensibles aux extrémités desquelles sont fixées les béquilles, chaque moyen de fixation étant formé d'un organe de fixation complémentaire à savoir un organe de fixation mâle (15) et un organe de fixation femelle (17) solidarisés ou désolidarisés au moyen d'une attache rapide (18) et la plateforme (4) étant fixée sur un faux châssis formé de deux poutres longitudinales (13), les poutres longitudinales étant équipées à espaces réguliers d'organes de fixation tous mâles ou tous femelles, les organes de fixation complémentaires étant prévus sur le châssis (3) du véhicule et à espaces réguliers au regard de ceux de la plateforme.

2. Véhicule tracteur (2) selon la revendication 1, **caractérisé en ce que** les béquilles sont en position escamotée dans la configuration de transport du véhicule tracteur, et présentent chacune une position d'extension intermédiaire pour être en appui sur le sol et assurer la stabilité de l'ensemble lors des opérations de chargement-déchargement, ainsi qu'une position d'extension maximum de manière à soulever la plateforme (4) par rapport au châssis (3).

3. Véhicule tracteur (2) selon l'une des revendications précédentes, **caractérisé en ce que** chaque organe de fixation mâle (15) a une forme générale verticale plane et trapézoïdale avec une pente (16) de positionnement et chaque organe de fixation femelle (17) a la forme générale d'une fourche avec une rampe intérieure (18) facilitant la mise en place des organes de fixation mâles.

4. Véhicule tracteur (2) selon l'une des revendications précédentes, **caractérisé en ce que** le faux châssis de la plateforme comporte également des traverses (14).

5. Véhicule tracteur (2) selon l'une des revendications précédentes, **caractérisé en ce que** le châssis du véhicule tracteur est équipé de traverses.

6. Ensemble de transport comportant au moins un véhicule tracteur selon une des revendications précédentes et une remorque (9).

7. Ensemble de transport selon la revendication 6, **caractérisé en ce qu**'il comporte en outre un engin à chenilles 11 téléguidé comportant des moteurs hydrauliques pour l'actionnement des chenilles (19), lesdits moteurs étant connectés par des conduits à la centrale moto hydraulique de la grue (5).

8. Ensemble de transport selon l'une des revendications 6 à 7, **caractérisé en ce que** l'engin à chenille (11) comporte également un châssis avec deux longerons (21), chacun comportant une pluralité d'organes de fixation femelles (17) espacés régulièrement, ledit espacement étant le même que celui des organes de fixation mâles (15) de la plateforme.

9. Ensemble de transport selon la revendication 8, **caractérisé en ce que** le châssis de l'engin à chenilles comporte des traverses.

## Claims

1. Tractor vehicle (2), on the chassis of which a quadrangular platform (4) is fixed, for receiving the load to be transported and on which there is mounted a crane (5) with its articulated arm (6), said platform being fixed removably to the chassis (3) of the vehicle by a plurality of fixing means and comprising four hydraulic props (8) of variable and adjustable height, and two extensible cross members (12), at the ends of which the props are fixed, each fixing means being formed by a complementary fixing member, namely a male fixing member (15) and a female fixing member (17) connected or disconnected by means of a quick fastener (18), and the platform (4) being fixed to a false chassis formed from two longitudinal beams (13), the longitudinal beams being equipped at regular spaces with fixing members, all male or all female, the complementary fixing members being provided on the chassis (3) of the vehicle and at regular spaces opposite those on the platform.

2. Tractor vehicle (2) according to claim 1, **characterised in that** the props are in the retracted position in the transport configuration of the tractor vehicle and each have an intermediate extension position so as to be in abutment on the ground and to ensure the stability of the whole during loading and unloading operations, and a maximum extension position so as to raise the platform (4) with respect to the chassis (3).

3. Tractor vehicle (2) according to one of the preceding claims, **characterised in that** each male fixing member (15) has a flat trapezoidal vertical shape overall with a positioning slope (16) and each female fixing member (17) has the general shape of a fork with an internal ramp (18) facilitating the positioning of the male fixing members.

4. Tractor vehicle (2) according to one of the preceding claims, **characterised in that** the false chassis of the platform also comprises cross-members (14).

5. Tractor vehicle (2) according to one of the preceding claims, **characterised in that** the chassis of the tractor vehicle is equipped with cross-members.

6. Transportation unit comprising at least one tractor vehicle according to one of the preceding claims and a trailer (9).

7. Transportation unit according to claim 6, **characterised in that** it also comprises a remotely guided tracked machine 11 comprising hydraulic motors actuating the tracks (19), said motors being connected by conduits to the hydraulic motor unit of the crane (5).

8. Transportation unit according to one of claims 6 to 7, **characterised in that** the tracked machine (11) also comprises a chassis with two longitudinal members (21), each comprising a plurality of regularly spaced apart female fixing members (17), the said spacing being the same as that of the male fixing members (15) of the platform.

9. Transportation unit according to claim 8, **characterised in that** the chassis of the tracked machine comprises cross-members.

## Patentansprüche

1. Zugfahrzeug (2), auf dessen Rahmen eine rechteckige Ladefläche (4) zur Aufnahme der zu transportierenden Ladung befestigt ist und auf der ein Kran (5) mit seinem Gelenkarm (6) montiert ist, wobei die Ladefläche abnehmbar durch eine Mehrzahl von Befestigungsmitteln auf dem Rahmen (3) des Fahrzeugs befestigt ist und vier hydraulische Stützfüße (8) von variabler und einstellbarer Höhe und zwei ausfahrbare Querträger (12) aufweist, an deren Enden die Stützfüße befestigt sind, wobei jedes Befestigungsmittel von einem komplementären Befestigungselement gebildet ist, nämlich einem männlichen Befestigungselement (15) und einem weiblichen Befestigungselement (17), die mittels eines Schnellverbinders (18) miteinander fest verbunden oder voneinander gelöst sind, und wobei die Ladefläche (4) an einem von zwei Längsträgern (13) gebildeten Hilfsrahmen befestigt ist, wobei die Längsträger in regelmäßigen Abständen mit nur männlichen oder nur weiblichen Befestigungselementen versehen sind und die komplementären Befestigungselemente am Rahmen (3) des Fahrzeugs in regelmäßigen Abständen gegenüber denen der Ladefläche vorgesehen sind.

2. Zugfahrzeug (2) nach Anspruch 1, **dadurch gekennzeichnet, daß** die Stützfüße im Transportzustand des Zugfahrzeugs in ihrer eingeschobenen Stellung sind und jeder eine herausgeschobene Zwischenstellung, in der sie sich auf dem Boden abstützen und die Stabilität der Anordnung bei den Arbeitsgängen des Ladens-Entladens gewährleisten, sowie eine maximal herausgeschobene Stellung aufweisen, um die Ladefläche (4) bezüglich des Rahmens (3) anzuheben.

3. Zugfahrzeug (2) nach einem der vorangehenden Ansprüche, **dadurch gekennzeichnet, daß** jedes männliche Befestigungselement (15) eine allgemeine Form einer vertikalen und trapezoidförmigen Ebene mit einer Schrägfläche (16) zur Positionierung und jedes weibliche Befestigungselement (17) die allgemeine Form einer Gabel mit einer inneren Rampe (18) aufweist, wekhe das Einsetzen der männlichen Befestigungselemente erleichtert.

4. Zugfahrzeug (2) nach einem der vorangehenden Ansprüche, **dadurch gekennzeichnet, daß** der Zwischenrahmen der Ladefläche auch Querträger (14) aufweist.

5. Zugfahrzeug (2) nach einem der vorangehenden Ansprüche, **dadurch gekennzeichnet, daß** der Rahmen des Zugfahrzeugs mit Querträgern ausgerüstet ist.

6. Transporteinheit mit mindestens einem Zugfahrzeug nach einem der vorangehenden Ansprüche und mit einem Anhänger (9).

7. Transporteinheit nach Anspruch 6, **dadurch gekennzeichnet, daß** sie außerdem eine ferngesteuerte Raupenzugmaschine (11) mit Hydraulikmotoren zur Betätigung der Raupen (19) aufweist, wobei die Motoren durch Leitungen mit dem zentralen Hydraulikmotor des Krans (5) verbunden sind.

8. Transporteinheit nach einem der Ansprüche 6 bis 7, **dadurch gekennzeichnet, daß** die Raupenzugmaschine (11) auch einen Rahmen mit zwei Längsträgern (21) aufweist, die jeder eine Mehrzahl von weiblichen Befestigungselementen (17) tragen, die in gleichmäßigen Abständen angeordnet sind, wobei der Abstand der gleiche ist wie der der männlichen Befestigungselemente (15) der Ladefläche.

9. Transporteinheit nach Anspruch 8, **dadurch gekennzeichnet, daß** der Rahmen der Raupenzugmaschine Querträger aufweist.
